# EUROPEAN PATENT APPLICATION

(11) **EP 4 383 072 A1**
(43) Date of publication of application: **12.06.2024**
(21) Application number: 22212056.0
(22) Date of filing: 07.12.2022
(51) Int. Cl.: G06F 9/48

(54) **SCHEDULING METADATA FOR COMPOSABLE REAL-TIME SYSTEMS**

(71) Applicant: Hitachi Energy Ltd, 8050 Zürich (CH)
(72) Inventor: SIPOWICZ, Jakub, 30-348 Kraków (PL); EIDENBENZ, Raphael, 8049 Zürich (CH); DAN, Andrei-Marian, 8112 Otelfingen (CH)
(74) Representative: Vossius & Partner Patentanwälte Rechtsanwälte mbB

(57) **Abstract**

A method for integration of at least one composable service into a system of composable services, the method comprising: packaging scheduling metadata with at least one composable service, wherein the scheduling metadata includes scheduling related constraints for each of the at least one composable service; and integrating the at least one composable service into a system of composable services based on the scheduling metadata. A computer readable medium comprising at least one composable service comprising packaged scheduling metadata; wherein the scheduling metadata includes scheduling related constraints for each of the at least one composable service. A system for at least one composable service, the system comprising: a processor that is configured to integrate at least one composable service received from a computer readable medium based on the scheduling metadata into the system for at least one composable service.

## Description

The present disclosure relates to a method for integration of at least one composable service into a system of composable services and a system for at least one composable service.

Real-time systems require careful tuning of scheduling-related aspects (like thread priorities). This is done by hardcoding of such information or by manual configuration by a human expert. The problem becomes complex for systems composed of multiple services, especially if they are developed independently.

Complex software systems (e.g., factory or substation automation systems) are typically designed as compositions of multiple (preferably independent) services. This can either be used to compose a product with a fixed functionality by a vendor, or it can be used by end users or integrators to configure and deploy a system with functionality matching customer's requirements.

Automation systems are often implemented as embedded devices (e.g., protection relays or programmable logic controllers) with real-time software, i.e., software where at least some services have deterministic execution time fulfilling specific constraints.

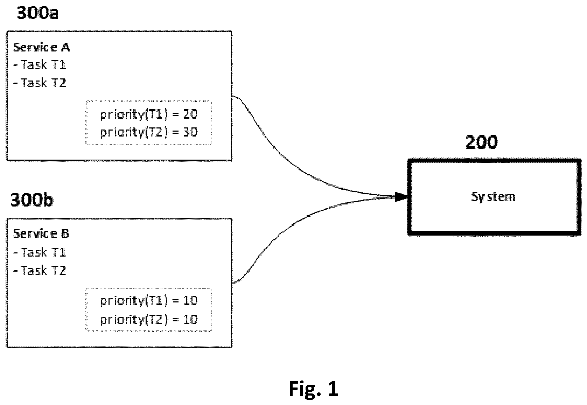

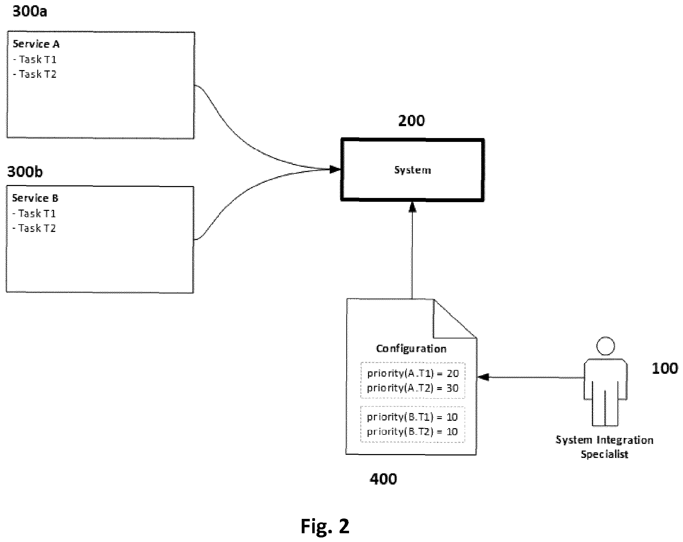

Proper operation of such a system requires tuning of various scheduling-related aspects, like thread priorities, affinities, cache partitioning, etc. Today, such systems are either developed with hardcoded scheduling characteristics (as illustrated in Fig. 1) or they are hand-tuned by a human expert doing the integration of the services into a system/product (Fig. 2).

The hardcoded or manual configuration of scheduling is particularly problematic when the real-time system consists of independently developed services which are supposed to be freely composable. In this case, hardcoded values may lead to scheduling conflicts. Similarly, with manual configuration, the integration engineer may select scheduling properties which inadvertently violate implicit assumptions of the service.

The invention is defined by the independent claims. The dependent claims relate to preferred embodiments.

The present disclosure relates to a method for integration of at least one composable service into a system of composable services, the method comprising: packaging scheduling metadata with at least one composable service, wherein the scheduling metadata includes scheduling related constraints for each of the at least one composable service; and integrating the at least one composable service into a system of composable services based on the scheduling metadata.

Various embodiments may preferably implement the following features:
Preferably, integrating the at least one composable service into a system of composable services based on the scheduling metadata comprises: utilizing the scheduling metadata for static verification and/or automatic generation and/or dynamic verification.

Preferably, packaging of the scheduling metadata comprises: including the scheduling metadata in a source file of each of the at least one composable service, or attaching the scheduling metadata to a binary package distributed via a package distribution mechanism.

Preferably, the at least one composable service is an independently developed software component for implementation/integration into the system of composable services.

Preferably, the system of composable services runs under a general-purpose operating system, wherein the at least one composable service is executed as a process, thread or container.

Preferably, scheduling metadata includes one or more constraints related to one or more schedulable entities such as relative thread priority, scheduling policy, CPU affinity, or cache partitioning.

Preferably, utilizing the scheduling metadata for static verification comprises: preparing, preferably manually preparing or preparing by a human expert, scheduling configuration for the at least one composable service within the system of composable services; wherein the prepared scheduling configuration is executable by the system of composable services.

In an embodiment, the preparing scheduling configuration for the at least one composable service within the system of composable services may comprise a (semi-)automated method for said preparing. For example, the (semi-)automated method may be an external automation, for example a script to make configurations.

Preferably, utilizing the scheduling metadata for static verification further comprises verifying, via a verification tool, whether the prepared, preferably manually prepared or prepared by a human expert, scheduling configuration satisfies all scheduling related constraints included in the scheduling metadata; and indicating a result of the verification.

Preferably, utilizing the scheduling metadata for automatic generation comprises automatically combining scheduling metadata of the at least one composable service, via an automated configuration tool, to generate global scheduling configuration that satisfies scheduling related constraints included in the scheduling metadata of the at least one composable service.

Preferably, utilizing the scheduling metadata for dynamic verification comprises performing runtime verification of the scheduling metadata, via an execution tool, to detect if there is violation of any scheduling related constraints included in the scheduling metadata of the at least one composable service; and indicating a result of the verification.

The present disclosure also relates to a computer readable medium that comprises at least one composable service comprising packaged scheduling metadata; wherein the scheduling metadata includes scheduling related constraints for each of the at least one composable service.

The present disclosure also relates to a system for at least one composable service, the system may comprise a processor that is configured to integrate at least one composable service received from a computer readable medium (as described above) based on the scheduling metadata into the system for at least one composable service.

Various embodiments may preferably implement the following features:
Preferably, the system further comprises an automated configuration tool that is configured to: receive the scheduling metadata packaged with each of the at least one composable service; combine the scheduling metadata packaged with each of the at least one composable service; and generate a scheduling configuration for the at least one composable service within the system of composable services, wherein the scheduling configuration is executable by the system of composable services.

Preferably, the system further comprises a static verification tool that is configured to: receive the scheduling configuration for the at least one composable service; receive the scheduling metadata packaged with each of the at least one composable service; verify whether the scheduling configuration satisfies all scheduling related constraints included in the scheduling metadata; and indicate a result of the verification.

Preferably, the system further comprises a dynamic verification tool that is configured to: receive the scheduling metadata packaged with each of the at least one composable service, receive an execution log file, wherein the execution log file comprises scheduling-related information from actual execution of the system configured with the services, and perform runtime verification of the scheduling metadata to detect whether there is any violation of any scheduling related constraints included in the scheduling metadata of the at least one composable service based on the scheduling metadata and the execution log file.

According to an embodiment, a method for creating additional metadata that accompanies distribution packages of composable services is provided. Such metadata describes scheduling-related constraints to be satisfied in the final system. The metadata may be used for static or dynamic verification of the system, and/or for automated configuration.

According to an embodiment of the present disclosure, the system may include composable services packaged together with metadata describing their constraints related to scheduling. The metadata may define at least one of (i) relative thread priority, (ii) scheduling policy, (iii) CPU affinity, and/or (iv) cache partitioning. The mechanisms of packaging may include (i) distribution as source code and the metadata is included among source files, (ii) through package distribution mechanism (e.g..deb) and the metadata is installed together with the files, and (iii) through container images and the metadata is attached and distributed together with the image.

According to another embodiment of the present disclosure, a system with metadata as described above may be used to configure or verify scheduling of services. For example, (a) it may be used to statically verify scheduling configuration prepared by a human expert, (b) it may be used to automatically generate scheduling configuration, (c) it may be used to dynamically verify system behavior by monitoring it at runtime such as (i) to detect improper implementation, and/or (ii) to detect cybersecurity violations (e.g., rogue threads).

The present disclosure is made in view of the above-mentioned problems and provides methods and systems for integration of at least one composable service based on metadata, in particular scheduling metadata for composable real-time systems.

The approach in the present disclosure improves the quality of the systems by ensuring that they do not violate requirements of each used service. The automated configuration can reduce the cost and enables the "plug and play" composability of services.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.
Fig. 1 shows a hardcoded configuration of scheduling related services that is hand-tuned at development time by a human expert according to the conventional art.
Fig. 2 shows a manual configuration of working scheduling configuration prepared by a human expert at integration time according to the conventional art.
Fig. 3 shows an illustration of static verification of manually prepared scheduling configuration according to an embodiment of the present disclosure.
Fig. 4 shows an illustration of automated generation of scheduling configuration based on metadata for all services used according to an embodiment of the present disclosure.
Fig. 5 shows an illustration of dynamic verification performing runtime verification of the scheduling metadata according to an embodiment of the present disclosure.
Fig. 6 shows a flow chart illustrating the method for integration of at least one composable service into a system of composable services according to an embodiment of the present disclosure.
Fig. 7 shows a system for integration of at least one composable service into a system of composable services according to an embodiment of the present disclosure.

The disclosure is generally related to composable real-time systems, i.e., systems composed of independently-developed components (services). Nowadays, such systems are often implemented using general-purpose operating system with real-time capabilities (e.g., PREEMPT-RT Linux). Each service may be a separate process, containerized or not. Such services can themselves create additional threads, with various characteristics (e.g., with specific priority, limited to specific CPUs, etc.). All such threads are then executed using the operating system's (OS's) global scheduler, which works according to scheduling policies, priorities, affinities, etc.

Fig. 1 shows a hardcoded configuration of scheduling related services that is hand-tuned by a human expert according to the conventional art. In particular, Fig. 1 shows a system 200 and a service A 300a and a service B 300b. The service A 300a comprises tasks T1 and T2. The service B 300b comprises tasks T1 and T2. In addition, service A 300a comprises characteristics that are hardcoded into service A's 300a implementation, i.e. priority for task T1 is 20 and priority for task 2 is 30. Likewise, service B 300b comprises characteristics that are hardcoded into service B's 300b implementation, i.e. priority for task T1 is 10 and priority for task T2 is 10.

That is, if the final system 200 (i.e., the hardware (HW) setup and the set of services 300a and 300b to run) is fixed and known at development time, such characteristics may be hardcoded into each service's implementation. For example, service A 300a may be implemented to create a task with priority 20 and service B 300b may be implemented to create a task with priority 10 and, as developers possess "complete knowledge" about the target system 200, they know the system 200 will run fine with these particular setups. This is illustrated in Fig. 1.

However, the situation is more challenging if services are developed independently, the subset of services 300a and 300b to use is unknown at development time (for example, it is a configurable product) or the system 200 can run on hardware with different capabilities (e.g., faster CPU, different number of cores, different number of nodes in the distributed system 200). In such cases, a completely fixed setup may perhaps not work correctly, or run sub optimally.

Fig. 2 shows a manual configuration of working scheduling configuration prepared by a human expert according to the conventional art. In particular, Fig. 2 shows a human expert 100, a system 200, service A 300a, service B 300b and a working configuration file 400.

If there is a possibility to configure scheduling characteristics externally (e.g., via some configuration files), the human expert 100 (System Integration Specialist) can prepare a working configuration file 400 based on his/her know-how and tests, which is then used to integrate the services 300a and 300b into the system 200. However, this relies on the expert's knowledge about the services 300a and 300b, from documentation or just experience.

What is missing is a machine-readable way to formally express constraints with respect to scheduling of threads for each individual service 300a and 300b. Such constraints could then be combined to derive global scheduling information for the entire system 200, in a fully automated way or by assisting a human engineer 100.

The present disclosure introduces a concept of scheduling metadata, which describes each service's constraints with respect to scheduling. Such metadata describe what schedulable entities (tasks, threads) exist in the service and what their limitations or preferences are regarding real-time execution. Examples of such information may be:
1. "thread X must have priority 60",
2. "thread X must have higher priority than thread Y",
3. "thread X must be the single highest priority thread in the system"
4. "thread X must run on same CPU as thread Y",
5. "thread X must run on different CPU than thread Y",
6. "thread X must have a CPU for exclusive use",
7. "thread X must run on the same CPU as interrupts from network card A",
8. "thread X must share L2/L3 cache with thread Y".

Such rules leave some freedom for the actual setup, for example rule #6 does not specify which exact CPU would be assigned to thread X.

Such metadata are created, e.g., by service developers. The exact syntax may be, e.g., a DSL (Domain Specific Language). However, the present disclosure is not limited to the exact syntax and the skilled person may use any suitable syntax.

When a new version of the service is released (in any form, e.g., as source code, compiled binary, or binaries in a container image) the metadata is bundled together with the release and made available to the party performing the composition of the system 200. For example, for containerized applications such metadata could be attached as custom labels to the Docker image.

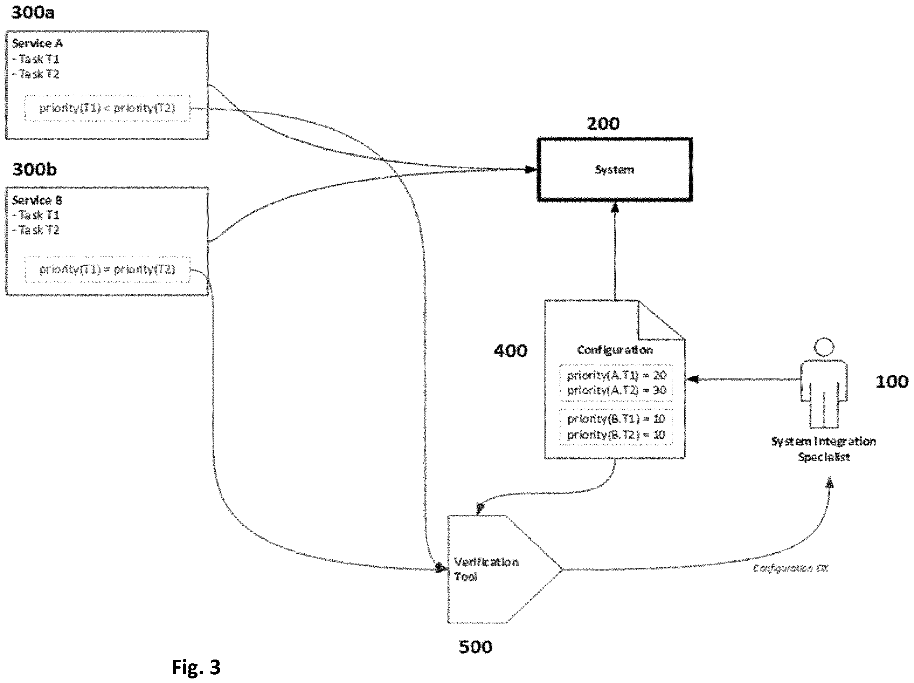

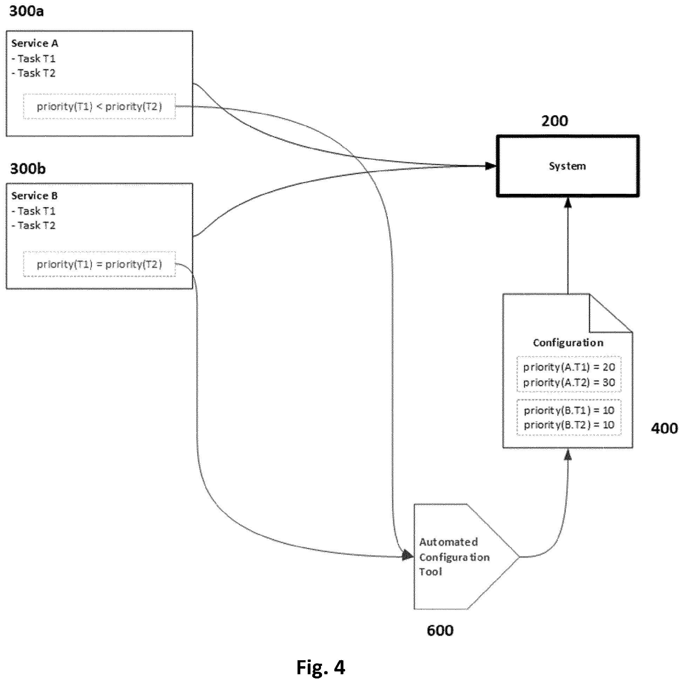

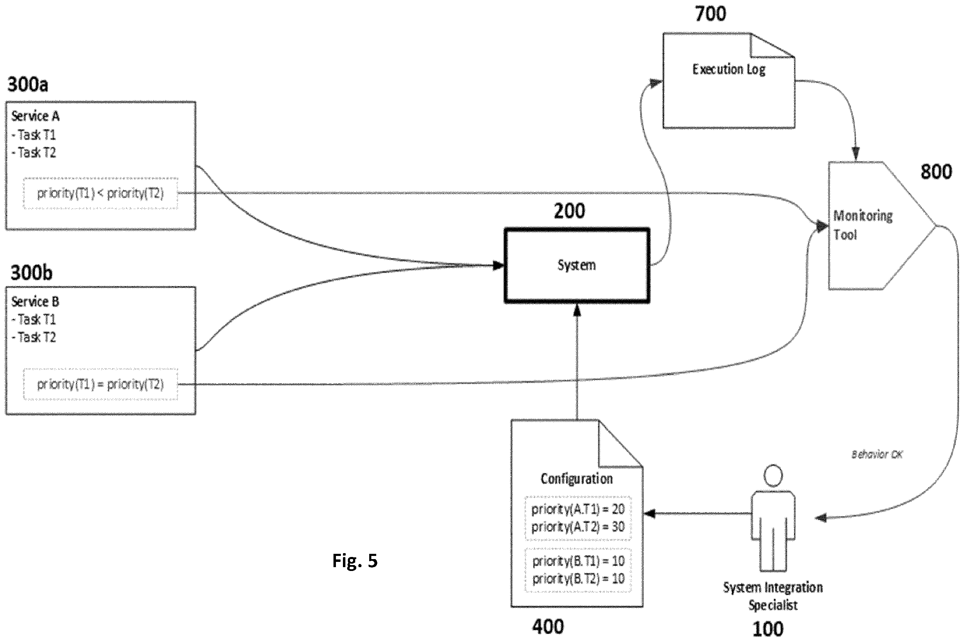

Examples of the embodiments described in the present disclosure are illustrated in Figs. 3, 4 and 5. Fig. 3 is an illustration of static verification of manually prepared scheduling configuration. Fig. 4 is an illustration of automated generation of scheduling configuration based on metadata for all services used. Fig. 5 is an illustration of dynamic verification performing runtime verification of the behavior of the system based on the scheduling metadata.

More specifically, when the system is composed (e.g., by a System Integration Specialist), the metadata can be utilized in different ways, some of which are illustrated in Figs. 3 to 5:

Fig. 3 illustrates a process of static verification according to an embodiment of the present disclosure. In particular, Fig. 3 shows a human expert (system integration specialist) 100, a system 200, service A 300a, service B 300b, a configuration file 400 and a verification tool 500.

The scheduling configuration is first manually prepared by a system integration specialist 100, such that the verification tool 500 could then, based on metadata for all used services 300a and 300b, verify if the manually prepared configuration satisfies all constraints of the services 300a and 300b.

The metadata are contained in the respective services 300a and 300b. In particular, in Fig. 3, service A 300a and service B 300b carry the metadata of: priority(T1)<priority(T2) and priority(T1)=priority(T2), respectively. The metadata and the configuration file 400 prepared by the human expert 100 are received at the verification tool 500. The verification tool 500 will then execute a respective verification by comparing the metadata with the manually prepared configuration file 400.

Thereafter, the verification tool 500 will indicate a result of the verification and inform the human expert 100 accordingly if there is any unsatisfied constraint and/or in case of conflict between the constraints. During a static verification, the system 200 is not run (in an inactive state).

The final configuration, i.e. once the verification tool 500 returns a positive verification to the human expert 100, the configuration is sent to the system 200, i.e. the system 200 is configured according to the configuration file 400.

Fig. 4 illustrates a process of automatic generation of scheduling configuration according to another embodiment of the present disclosure. In particular, Fig. 4 shows a system 200, service A 300a, service B 300b, a configuration file 400 and an automated configuration tool 600.

The automated configuration tool 600 receives the metadata carried by the services 300a and 300b and automatically generates a combination of scheduling aspects that satisfies the constraints (metadata) of the required services 300a and 300b and generates a scheduling configuration (configuration file 400) based on the metadata for all used services 300a and 300b. The system 200 is then automatically configured with the services 300a and 300b based on the configuration file 400.

Fig. 5 illustrates a dynamic verification process of performing runtime verification of the scheduling metadata according to an embodiment of the present disclosure. In particular, Fig. 5 shows a human expert (system integration specialist) 100, a system 200, a service A 300a, a service B 300b, a configuration file 400, an execution log 700 and a monitoring tool 800 (also referred to as dynamic verification tool 800).

The services 300a and 300b are incorporated into the system 200. Actual execution of the system 200 configured with the services 300a and 300b is observed for all scheduling-related information. The observed information is first captured in the execution log file 700.

The execution log file 700 is then analyzed by the monitoring tool 800 to check if there were any violations of the scheduling constraints. In particular, the monitoring tool 800 receives the services 300a and 300b and in particular their metadata and receives the execution log file 700 and checks for possible violations of the scheduling constraints as specified by the metadata. That is, the execution tool 800 is used to perform runtime verification of the scheduling metadata to detect if there is violation of any scheduling related constraints included in the scheduling metadata of the at least one required service 300a and 300b. The monitoring tool 800 will then indicate a result of the verification and inform the system specialist 100 whether any violation of constraint requirements were detected. During a dynamic verification - the system 200 is run to collect execution data (in an active state).

Once the global scheduling configuration is prepared (regardless of whether in the manual or automated way), a mechanism (API) is provided that allows services to query at runtime final characteristics of their threads, so they could create and set them up accordingly.

It is to be appreciated that the present disclosure is not limited by the number of services described in the foregoing embodiments. In addition, the present disclosure is not limited by the number of tasks that each service may provide. Although the number of tasks is described as being equal between service A and service B in the above, it is clear that the number of tasks can also differ between service A and service B. The same is true for the number of characteristics (constraints) associated to each task, i.e. any number of characteristics for a task is encompassed by the present disclosure.

Each of the above-mentioned verification tool 500, the automated configuration tool 600 and the monitoring tool 800 may be implemented using software and/or hardware components. For example, each of the above-mentioned verification tool 500, the automated configuration tool 600 and the monitoring tool 800 may be implemented by way of a processor that is configured to execute any of the above-mentioned functions.

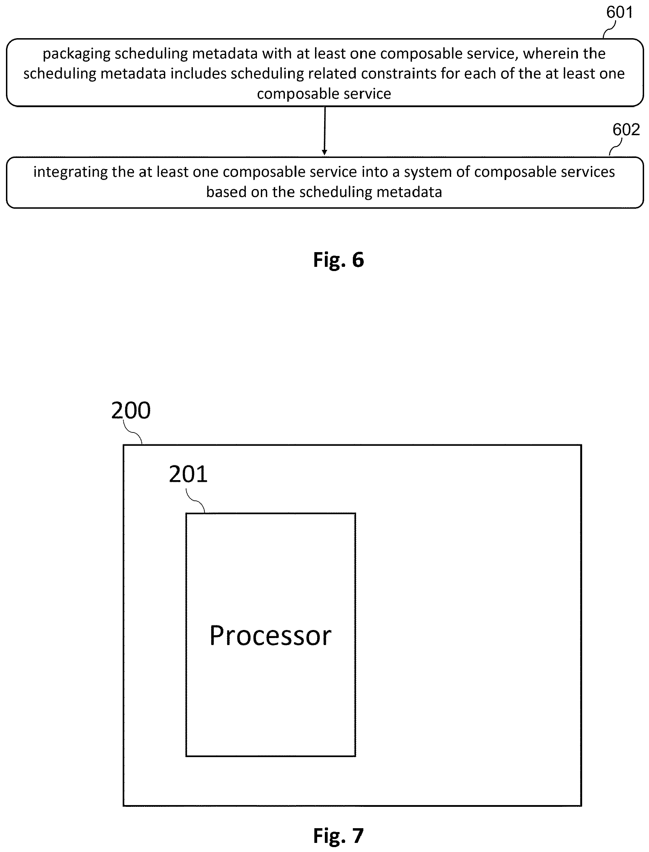

Fig. 6 shows a flow chart of a method according to an embodiment of the present disclosure. The method shown in Fig. 6 may be used for integration of at least one composable service into a system of composable services and comprise the following steps:
Step 601: packaging scheduling metadata with at least one composable service, wherein the scheduling metadata includes scheduling related constraints for each of the at least one composable service.
Step 602: integrating the at least one composable service into a system of composable services based on the scheduling metadata.

In an embodiment, integrating the at least one composable service into a system of composable services based on the scheduling metadata comprises utilizing the scheduling metadata for static verification and/or automatic generation and/or dynamic verification.

In an embodiment, packaging of the scheduling metadata comprises including the scheduling metadata in a source file of each of the at least one composable service, or attaching the scheduling metadata to a binary package distributed via a package distribution mechanism.

In an embodiment, scheduling metadata includes one or more constraints related to one or more schedulable entities such as relative thread priority, scheduling policy, CPU affinity, or cache partitioning.

In an embodiment, utilizing the scheduling metadata for static verification comprises preparing scheduling configuration for the at least one composable service within the system of composable services; wherein the prepared scheduling configuration is executable by the system of composable services.

In an embodiment, utilizing the scheduling metadata for static verification further comprises verifying, via a verification tool, whether the prepared scheduling configuration satisfies all scheduling related constraints included in the scheduling metadata; and indicating a result of the verification.

In an embodiment, utilizing the scheduling metadata for automatic generation comprises: automatically combining scheduling metadata of the at least one composable service, via an automated configuration tool, to generate global scheduling configuration that satisfies scheduling related constraints included in the scheduling metadata of the at least one composable service.

In an embodiment, utilizing the scheduling metadata for dynamic verification comprises performing runtime verification of the scheduling metadata, via an execution tool, to detect if there is violation of any scheduling related constraints included in the scheduling metadata of the at least one composable service; and indicating a result of the verification.

Fig. 7 shows a system 200 according to an embodiment of the present disclosure. The system 200 may be used for integration of at least one composable service into a system of composable services. The system 200 comprises a processor 201 that is configured to integrate at least one composable service received from a computer readable medium based on scheduling metadata into the system for at least one composable service.

In an embodiment, the computer readable medium comprises at least one composable service comprising packaged scheduling metadata, wherein the scheduling metadata includes scheduling related constraints for each of the at least one composable service

In an embodiment, the system 200 comprises an automated configuration tool that is configured to: receive the scheduling metadata packaged with each of the at least one composable service; combine the scheduling metadata packaged with each of the at least one composable service; and generate a scheduling configuration for the at least one composable service within the system of composable services, wherein the scheduling configuration is executable by the system of composable services.

In an embodiment, the system 200 further comprises: a static verification tool that is configured to: receive the scheduling configuration for the at least one composable service; receive the scheduling metadata packaged with each of the at least one composable service verify whether the scheduling configuration satisfies all scheduling related constraints included in the scheduling metadata; and indicate a result of the verification.

In an embodiment, the system 200 further comprises: a dynamic verification tool that is configured to: receive the scheduling metadata packaged with each of the at least one composable service; receive an execution log file, wherein the execution log file comprises scheduling-related information from actual execution of the system configured with the services; and perform runtime verification of the scheduling metadata to detect whether there is any violation of any scheduling related constraints included in the scheduling metadata of the at least one composable service based on the scheduling metadata and the execution log file.

The dynamic verification tool and/or the static verification tool and/or the automated configuration tool may be provided as separate components from the system 200. Each of the dynamic verification tool and/or the static verification tool and/or the automated configuration tool may comprise a processor that is configured to execute the above-mentioned functions.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of the claims. Thus, the disclosure is not intended to be limited to the implementations shown herein, but is to be accorded the widest scope consistent with the novel features and principles disclosed herein, as recited in the claims below.

## Claims

1. A method for integration of at least one composable service (300a, 300b) into a system (200) of composable services, the method comprising:
packaging (601) scheduling metadata with at least one composable service (300a, 300b),
wherein the scheduling metadata includes scheduling related constraints for each of the at least one composable service (300a, 300b); and
integrating (602) the at least one composable service (300a, 300b) into a system (200) of composable services based on the scheduling metadata.

2. The method according to claim 1, wherein integrating (602) the at least one composable service into a system (200) of composable services based on the scheduling metadata comprises:
utilizing the scheduling metadata for static verification and/or automatic generation and/or dynamic verification.

3. The method according to claim 1 or 2, wherein the packaging (601) of the scheduling metadata comprises:
including the scheduling metadata in a source file of each of the at least one composable service (300a, 300b), or
attaching the scheduling metadata to a binary package distributed via a package distribution mechanism.

4. The method according to any one of claims 1 to 3,
wherein the scheduling metadata includes one or more constraints related to one or more schedulable entities such as relative thread priority, scheduling policy, CPU affinity, or cache partitioning.

5. The method according to any one of claims 2 to 4,
wherein utilizing the scheduling metadata for static verification comprises:
preparing scheduling configuration for the at least one composable service (300a, 300b) within the system (200) of composable services;
wherein the prepared scheduling configuration is executable by the system (200) of composable services.

6. The method according to claim 5, wherein utilizing the scheduling metadata for static verification further comprises:
verifying, via a verification tool (500), whether the prepared scheduling configuration satisfies all scheduling related constraints included in the scheduling metadata; and
indicating a result of the verification.

7. The method according to any one of claims 2 to 6, wherein utilizing the scheduling metadata for automatic generation comprises:
automatically combining scheduling metadata of the at least one composable service (300a, 300b), via an automated configuration tool (600), to generate global scheduling configuration that satisfies scheduling related constraints included in the scheduling metadata of the at least one composable service.

8. The method according to any one of claims 2 to 7, wherein utilizing the scheduling metadata for dynamic verification comprises:
performing runtime verification of the scheduling metadata, via an execution tool (800), to detect whether there is violation of any scheduling related constraints included in the scheduling metadata of the at least one composable service (300a, 300b); and
indicating a result of the verification.

9. A computer readable medium comprising:
at least one composable service (300a, 300b) comprising packaged scheduling metadata;
wherein the scheduling metadata includes scheduling related constraints for each of the at least one composable service (300a, 300b).

10. A system (200) for at least one composable service, the system (200) comprising:
a processor (201) that is configured to integrate at least one composable service (300a, 300b) received from a computer readable medium according to claim 10 based on the scheduling metadata into the system (200) for at least one composable service.

11. The system (200) according to claim 10, further comprising:
an automated configuration tool (600) that is configured to:
receive the scheduling metadata packaged with each of the at least one composable service (300a, 300b);
combine the scheduling metadata packaged with each of the at least one composable service (300a, 300b); and
generate a scheduling configuration for the at least one composable service (300a, 300b) within the system (200) of composable services, wherein the scheduling configuration is executable by the system (200) of composable services.

12. The system according to claim 11, further comprising:
a static verification tool (500) that is configured to:
receive the scheduling configuration for the at least one composable service (300a, 300b),
receive the scheduling metadata packaged with each of the at least one composable service (300a, 300b),
verify whether the scheduling configuration satisfies all scheduling related constraints included in the scheduling metadata; and
indicate a result of the verification.

13. The system according to any one of claims 10 to 12, further comprising:
a dynamic verification tool (800) that is configured to:
receive the scheduling metadata packaged with each of the at least one composable service (300a, 300b),
receive an execution log file (700), wherein the execution log file (700) comprises scheduling-related information from actual execution of the system (200) configured with the services (300a, 300b), and
perform runtime verification of the scheduling metadata to detect whether there is any violation of any scheduling related constraints included in the scheduling metadata of the at least one composable service based on the scheduling metadata and the execution log file (700).
